# EUROPÄISCHE PATENTSCHRIFT

(11) **EP 2 225 947 B1**
(45) Veröffentlichungstag und Bekanntmachung des Hinweises auf die Patenterteilung: **29.07.2015**
(21) Anmeldenummer: 10155379.0
(22) Anmeldetag: 03.03.2010
(51) Int. Cl.: A22C 11/02, A22C 7/00, A22C 11/04, A23P 1/08

(54) **Vorrichtung zum Abfüllen von Produkten aus Fleisch, Fisch oder Geflügel**
Device for filling products made of meat, fish or poultry
Dispositif de remplissage de produits avec de la viande, du poisson ou de la volaille

(30) Priorität: 07.03.2009 DE 202009003326 U
(43) Veröffentlichungstag der Anmeldung: 08.09.2010
(73) Patentinhaber: Schröder Maschinenbau KG, 33824 Werther (DE)
(72) Erfinder: Danwerth, Peter J., 33803, Steinhagen (DE)
(74) Vertreter: Ter Meer Steinmeister & Partner

(56) Entgegenhaltungen:
- EP-A1- 0 519 540
- EP-A2- 1 595 456
- DE-U1- 8 111 750

## Beschreibung

Die Erfindung betrifft eine Vorrichtung zum Abfüllen vom Produkten aus Fleisch, Fisch oder Geflügel, mit einem Tisch, in den ein Trog eingelassen ist, und einem Schieber, der auf dem Tisch verschiebbar ist zwischen einer Einlegeposition für die Produkte und einer Übergabeposition, in der die Produkte in den Trog fallengelassen werden.

Schinkenstücke und vergleichbare Produkte aus Fleisch, Fisch oder Geflügel werden häufig vor der weiteren Verarbeitung (z. B. Kochen) in eine bestimmte Form gepresst und/oder in einen Darm gepresst. Die Erfindung befasst sich insbesondere mit einer Vorrichtung, mit der solche Produkte in die Pressform bzw. den Darm abgefüllt werden können.

Aus DE 81 11 750 U1 ist eine Vorrichtung bekannt, die zum Abfüllen formbarer Lebensmittelprodukte dient und ein Füllrohr aufweist, in welches das Produkt nach Öffnen eines Verschlusses von der Seite her eingegeben werden kann.

Häufig ist es erwünscht, dass die Produkte, beispielsweise von Hand, in einer bestimmten räumlichen Anordnung zueinander in den Schieber eingelegt werden, so dass man nach dem Pressen eine gewünschte Konfiguration der Produkte erhält.

Einige herkömmliche Vorrichtungen der eingangs genannten Art erlauben ein effizientes, chargenweises Arbeiten, bei dem eine erste Charge im Trog gepresst wird, während der Schieber sich in der Einlegeposition befindet und eine zweite Charge von Produkten in den Schieber eingelegt wird. Anschließend werden die Produkte mit Hilfe des Schiebers in die Übergabeposition überführt, so dass sie in der gewünschten Anordnung in den Trog fallen.

Gelegentlich kommt es bei der bekannten Vorrichtung jedoch vor, dass die Produkte während des oben beschriebenen Vorgangs übereinander geschoben werden oder übereinander fallen, so dass sie, nachdem sie in den Trog fallengelassen wurden, nicht mehr die gewünschten Positionen relativ zueinander einnehmen.

Aufgabe der Erfindung ist es, eine Vorrichtung zu schaffen, mit der die Produkte zuverlässig in einer gewünschten räumlichen Anordnung abgefüllt werden können.

Diese Aufgabe wird erfindungsgemäß dadurch gelöst, dass zwischen dem Tisch und dem Schieber eine Verschlussplatte angeordnet ist, die, wenn sich der Schieber in der Übergabeposition befindet, schlagartig aus einer Schließstellung, in der sie den Trog abdeckt, in eine Freigabestellung überführbar ist.

Wenn die Produkte mit Hilfe des Schiebers in die Übergabeposition geschoben werden, fallen sie somit nicht sofort in den Trog, sondern sie bleiben zunächst auf der Verschlussplatte liegen. Erst wenn diese schlagartig in die Freigabestellung gebracht wird, fallen die Produkte in den darunter befindlichen Trog. Die Massenträgheit der Produkte sorgt dabei dafür, dass sie durch die schlagartig bewegte Verschlussplatte nicht in ihrer räumlichen Anordnung zueinander gestört werden, sondern in der Konfiguration in den Trog fallen, in der sie zuvor in den Schieber eingelegt wurden.

Vorteilhafte Ausgestaltungen der Erfindung sind in den Unteransprüchen angegeben.

Im folgenden werden Ausführungsbeispiele anhand der Zeichnung näher erläutert.

Es zeigen:
- Fig. 1 bis 4: schematische Schnitte durch eine erfindungsgemäße Vorrichtung in verschiedenen Betriebsphasen; und
- Fig. 5 bis 7: schematische Schnitte durch eine Vorrichtung gemäß einem anderen Ausführungsbeispiel.

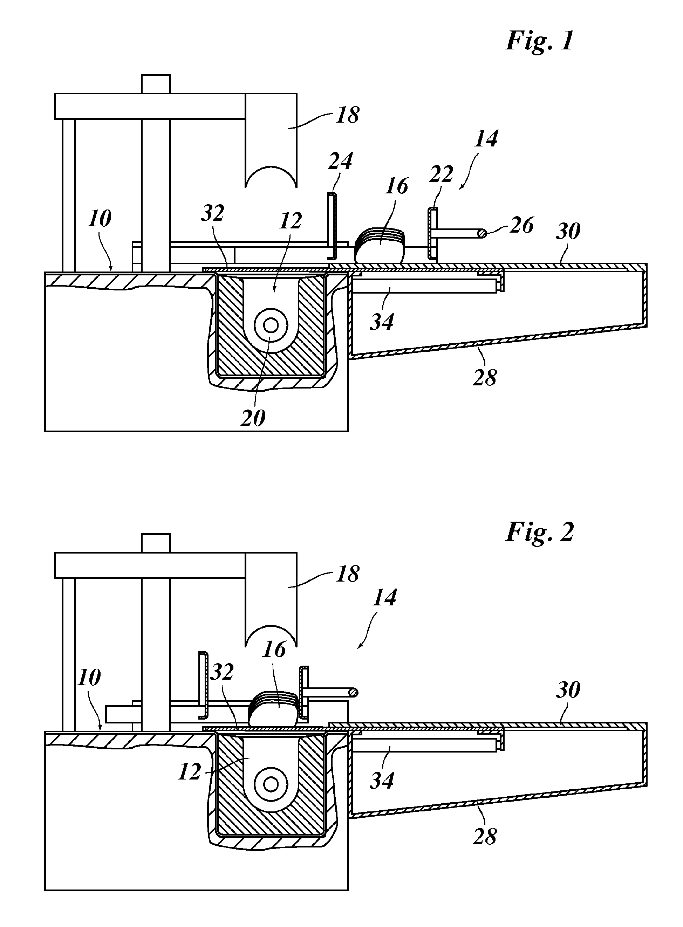

Die in Fig. 1 gezeigte Vorrichtung weist einen Tisch 10 auf, in dessen waagerechte Oberfläche ein Trog 12 eingelassen ist. Ein Schieber 14 ist in waagerechter Richtung auf der Oberfläche des Tisches 10 verschiebbar, so dass Produkte 16, beispielsweise Schinkenscheiben, mit Hilfe des Schiebers 14 in den Trog 12 geschoben werden können.

Oberhalb des Tisches ist in einer Position unmittelbar über dem Trog 12 ein vertikalbeweglicher Press-Stempel 18 angeordnet, der in Fig. 1 in angehobener Stellung gezeigt ist. Wenn die Produkte 16 mit Hilfe des Schiebers in den Trog 12 überführt worden sind, so wird der Press-Stempel 18 abgesenkt, so dass die Produkte in eine gewünschte Form gepresst werden können. Im gezeigten Beispiel werden die Produkte dann, nachdem sie in eine annähernd zylindrische Form gepresst worden sind, mit Hilfe eines stirnseitig an dem Trog angeordneten Stößels 20 in einen Darm geschoben. Diese Bewegung erfolgt in der Richtung senkrecht zur Zeichenebene in Fig. 1, so dass der Darm und die ihm zugeordnete Öffnung in der dem Stößel 20 gegenüberliegenden Stirnseite des Troges hier nicht erkennbar sind.

Der Schieber 14 hat im gezeigten Beispiel die Form eines an der Oberseite und an der Unterseite offenen Kastens mit erhöhten vorderen und hinteren Wänden 22, 24. An der vorderen Wand 22 ist ein Griff 26 angebracht, mit dem sich der Schieber von Hand auf dem Tisch 10 verschieben lässt.

Der Tisch 10 ist auf der Seite, auf der sich der Schieber 14 befindet, durch eine angebaute Konsole 28 verlängert, deren obere Oberfläche durch eine Gleitplatte 30 gebildet wird.

In Fig. 1 befindet sich der Schieber 14 in einer Einlegeposition, in der er gegenüber dem Press-Stempel 18 und dem Trog 12 versetzt ist, so dass die Produkte 16 in den kastenförmigen Schieber eingelegt werden können. Die Produkte 16 liegen dann auf der Gleitplatte 30 auf.

An der Unterseite der Gleitplatte 30 ist verschiebbar eine Verschlussplatte 32 geführt, die in dem in Fig. 1 gezeigten Zustand die obere Öffnung des Troges 12 abdeckt und die sich mit Hilfe eines Antriebs 34, beispielsweise mit Hilfe von Pneumatikzylindern, parallel zur Verschieberichtung des Schiebers 14, jedoch unabhängig von diesem, relativ zu dem Tisch 10 verschieben lässt.

Fig. 2 zeigt die Vorrichtung in einem Zustand, in dem der Schieber 14 von Hand in eine Übergabeposition verschoben wurde, in der er sich zwischen dem Press-Stempel 18 und dem Trog 12 befindet. Die Produkte 16 sind durch die vordere Wand 22 des Schiebers in eine Position unmittelbar oberhalb des Troges 12 verschoben worden, können jedoch noch nicht in den Trog hineinfallen, da dieser noch durch die Verschlussplatte 32 verschlossen ist. Sie sind lediglich etwas nach unten gerutscht, nachdem sie das Ende der Gleitplatte 30 passiert haben.

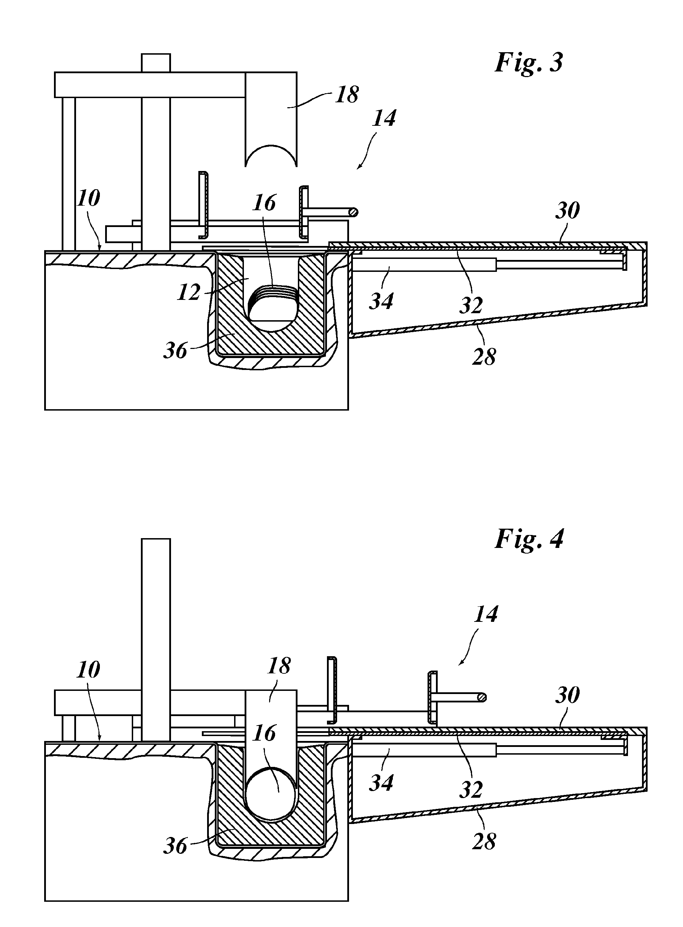

Wenn der in Fig. 2 gezeigte Zustand erreicht ist, betätigt der Benutzer einen Schalter, der den Antrieb 34 aktiviert. Daraufhin wird die Verschlussplatte 32 schlagartig in die in Fig. 3 gezeigte Position zurückgezogen, in der sie die Produkte 16 freigibt, so dass diese in den Trog 12 fallen. Die Rückzugsbewegung der Verschlussplatte 32 erfolgt dabei so schnell, dass die Produkte 16 aufgrund ihrer Massenträgheit keine Gelegenheit haben, der Bewegung der Verschlussplatte in waagerechter Richtung zu folgen, sondern vielmehr einfach vertikal in den Trog 12 fallen und somit innerhalb des Troges noch dieselbe Konfiguration haben, in der sie in Fig. 1 in den Schieber 14 eingelegt worden sind.

Die Verschlussplatte 32 und der Antrieb 34 sind in dem in Fig. 3 gezeigten Zustand vollständig in der Konsole 28 aufgenommen.

Im nächsten Schritt wird dann der Schieber 14 von Hand wieder in die Einlegeposition gemäß Fig. 1 zurückgezogen. Wenn der Schieber die Einlegeposition erreicht, kann automatisch oder durch Schalterbetätigung der Press-Stempel 18 betätigt werden, so dass dieser sich in den Trog 12 absenkt und die Produkte 16 in die gewünschte Form presst, wie in Fig. 4 gezeigt ist. Unterdessen können neue Produkte in den Schieber 14 eingelegt werden.

Sofern die Produkte 16 in einen Darm abgefüllt werden sollen, können sie mit Hilfe des Stößels 20 (Fig. 1) in den Darm geschoben werden, bevor ein neuer Abfüllzyklus beginnt.

Die Innenwände des Troges 12 werden im gezeigten Beispiel durch einen Einsatz 36 gebildet, der sich ebenso wie der Press-Stempel 18 auswechseln lässt, so dass die Form, in welche die Produkte 16 gepresst werden, sich nach Bedarf variieren lässt.

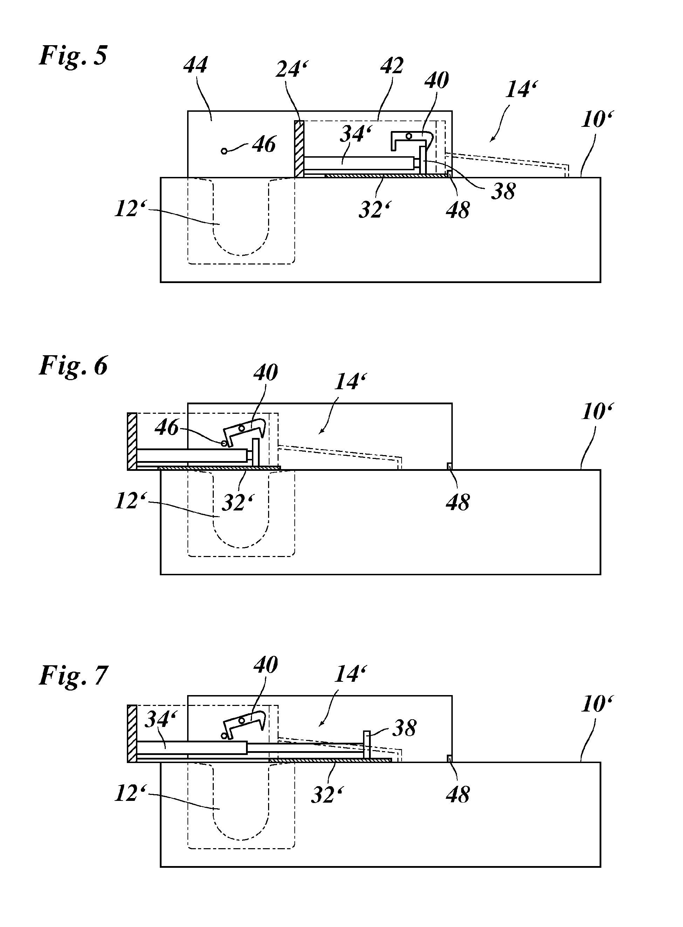

Fig. 5 bis 7 zeigten eine Vorrichtung gemäß einem modifizierten Ausführungsbeispiel, mit einem Tisch 10', einem Trog 12' und einem Schieber 14'. Die Schnittebene ist hier jedoch gegenüber dem Trog 12' und dem Schieber 14' versetzt, so dass diese Baugruppen nur strichpunktiert angedeutet sind. Nur eine hintere Wand 24' und eine Verschlussplatte 32' sind in Fig. 5 bis 7 geschnitten dargestellt, da diese Bauelemente in der Richtung senkrecht zur Zeichenebene über das Ende des Troges 12' hinaus verlängert sind. Die Verschlussplatte 32' bildet hier unmittelbar den Boden des kastenförmigen Schiebers 14' und ist in diesem geführt. Ein Antrieb 34' für die Verschlussplatte wird durch Pneumatikzylinder 34' gebildet, die beiderseits der Bewegungsbahn des Schiebers angeordnet sind und sich an den verlängerten Enden der hinteren Wand 24' abstützen. Auf der Verschlussplatte 32' ist an der Stelle des Antriebs 34' ein Ansatz 38 angebracht, an dem dieser Antrieb angreift. Eine Verriegelungsklinke 40 ist schwenkbar an einer Seitenwand 42 des Schiebers 14' gelagert und greift in dem in Fig. 5 gezeigten Zustand an dem Ansatz 38 an, so dass sie die Verschlussplatte 32' in der gezeigten Position hält, in der sie den Boden des Schiebers 14 bildet. Relativ zu dem Trog 12' befindet sich der Schieber 14' in Fig. 5 in der Einlegeposition.

Der Schieber 14' ist zwischen Seitenplatten 44 geführt, die beiderseits der Bewegungsbahn des Schiebers fest an dem Tisch 10' angeordnet sind. Jede dieser Seitenplatten trägt einen Anschlag 46, der in Richtung auf den Schieber 14' vorspringt.

Wenn nun der Schieber 14' in die in Fig. 6 gezeigte Übergabeposition geschoben wird, so stößt die Verriegelungsklinke 40 an dem Anschlag 46 an und schwenkt dadurch in eine Position, in der sie den Ansatz 38 und damit die Verschlussplatte 32' freigibt. Unter der Wirkung des Antriebs 34' bewegt sich nun die Verschlussplatte 32' schlagartig nach rechts in die in Fig. 7 gezeigte Position, in der sie den Boden des Schiebers 14' freigibt, so dass das Produkt in den Trog 12' fallen kann.

Mit Hilfe von Schaltern, die die Bewegung des Schiebers 14' oder der Verriegelungsklinke 40 abtasten, kann der durch die Pneumatikzylinder gebildete Antrieb 34' aktiviert werden, ggf. auch schon kurz bevor die in Fig. 6 und 7 gezeigte Endlage erreicht ist. Dadurch werden die Pneumatikzylinder schon mit einem bestimmten pneumatischen Druck vorgefüllt, so dass sie schneller ausfahren, wenn die Verriegelung durch die Verriegelungsklinke 40 aufgehoben wird.

Wenn der Schieber 14' aus der in Fig. 7 gezeigten Position wieder zurückgezogen wird, so bewegt sich die Verschlussplatte 32' zusammen mit dem Schieber zurück, bis ihr rückwärtiges Ende an einem fest am Tisch 10' oder der Seitenplatte 44 angebrachten Anschlag 48 anstößt. Wenn dann der Schieber 14' weiter zurückgezogen wird, so bewegt sich die Verschlussplatte 32' relativ zu dem Schieber wieder in die ursprüngliche Position gemäß Fig. 5, und die Verriegelungsklinke 40 läuft auf den Ansatz 38 auf und fällt dann hinter diesem ein, so dass die Verschlussplatte erneut verriegelt wird und ein neuer Zyklus beginnen kann.

## Patentansprüche

1. Vorrichtung zum Abfüllen von Produkten (16) aus Fleisch, Fisch oder Geflügel, mit einem Tisch (10; 10'), in den ein Trog (12; 12') eingelassen ist, und einem Schieber (14; 14'), der auf dem Tisch verschiebbar ist zwischen einer Einlegeposition für die Produkte (16) und einer Übergabeposition, in der die Produkte in dem Trog fallengelassen werden, **dadurch gekennzeichnet, dass** zwischen dem Tisch (10; 10') und dem Schieber (14; 14') eine Verschlussplatte (32; 32') angeordnet ist, die, wenn sich der Schieber (14; 14') in der Übergabeposition befindet, schlagartig aus einer Schließstellung, in der sie den Trog (12; 12') abdeckt, in eine Freigabestellung überführbar ist.

2. Vorrichtung nach Anspruch 1, **dadurch gekennzeichnet, dass** die Verschlussplatte (32; 32') in einer Richtung parallel zur Bewegungsrichtung des Schiebers (14; 14') zwischen der Schließstellung und der Freigabestellung verschiebbar ist.

3. Vorrichtung nach Anspruch 2, **dadurch gekennzeichnet, dass** ein Antrieb (34) dazu vorgesehen ist, die Bewegung der Verschlussplatte (32) relativ zu dem Tisch (10) zu steuern.

4. Vorrichtung nach Anspruch 1 oder 2, **dadurch gekennzeichnet, dass** ein Antrieb (34') dazu vorgesehen ist, die Bewegung der Verschlussplatte (32') relativ zu dem Schieber (14') zu steuern.

## Claims

1. Device for filling products (16) made of meat, fish or poultry, comprising a table (10; 10') having a trough (12, 12') sunk therein, and a pusher (14; 14') which is slidable on the table between a loading position for the products (16) and a transfer position in which the products are dropped into the trough, **characterized in that** a closure plate (32; 32') is provided between the table (10; 10') and the pusher (14; 14'), the closure plate being adapted to be moved abruptly, when the pusher (14; 14') is in the transfer position, from a closure position in which it covers the trough (12, 12') into a release position.

2. The device according to claim 1, **characterized in that** the closure plate (32; 32') is movable in a direction in parallel with the direction of movement of the pusher (14; 14') between the closure position and the release position).

3. The device according to claim 2, **characterized in that** a drive mechanism (34) is provided for controlling the movement of the closure plate (32) relative to the table (10).

4. The device according to claim 1 or 2, **characterized in that** a drive mechanism (34') is provided for controlling the movement of the closure plate (32') relative to the pusher (14').

## Revendications

1. Dispositif destiné à remplir des produits (16) avec de la viande, du poisson ou de la volaille, comportant une table (10 ; 10') dans laquelle un bac (12 ; 12') est introduit, et un coulisseau (14 ; 14') qui peut être déplacé sur la table entre une position d'insertion pour les produits (16) et une position de transfert dans laquelle les produits tombent dans le bac, **caractérisé en ce qu'**entre la table (10 ; 10') et le coulisseau (14 ; 14') est agencée une plaque de fermeture (32 ; 32') qui, lorsque le coulisseau (14 ; 14') se trouve dans la position de transfert, peut être soudainement transférée à partir d'une position de fermeture, dans laquelle elle recouvre le bac (12 ; 12') à une position de libération.

2. Dispositif selon la revendication 1, **caractérisé en ce que** la plaque de fermeture (32 ; 32') peut être déplacée dans une direction parallèle à la direction de déplacement du coulisseau (14 ; 14') entre la position de fermeture et la position de libération.

3. Dispositif selon la revendication 2, **caractérisé en ce qu'**un entraînement (34) est prévu pour commander le déplacement de la plaque de fermeture (32) par rapport à la table (10).

4. Dispositif selon la revendication 1 ou 2, **caractérisé en ce qu'**un entraînement (34') est prévu de manière à commander le déplacement de la plaque de fermeture (32') par rapport au coulisseau (14').
